# FASCICULE DE BREVET EUROPEEN

(11) **EP 0 590 210 B1**
(45) Date de publication et mention de la délivrance du brevet: **02.12.1998**
(21) Numéro de dépôt: 92402512.5
(22) Date de dépôt: 14.09.1992
(51) Int. Cl.: C04B 14/08

(54) **Mortier ou béton à hautes performances**
Hochleistungsmörtel oder -beton
High performance mortar or concrete

(43) Date de publication de la demande: 06.04.1994
(73) Titulaire: Matière, Marcel, F-15000 Aurillac (FR)
(72) Inventeur: Matière, Marcel, F-15000 Aurillac (FR)
(74) Mandataire: Le Brusque, Maurice

(56) Documents cités:
- EP-A- 335 405
- FR-A- 2 673 935
- US-E- 16 732
- R. CALVERT, "Diatomaceous Earth", 1930, American Chemical Society, New York, NY (US); pp. 34-35, 162-164

## Description

L'invention a pour objet un mortier ou béton à hautes performances ayant une résistance à l'écrasement supérieure à 40 Mégapascals (MPa), d'autres propriétés étant également améliorées.

On sait qu'un mortier ou un béton est constitué, en proportions voulues, d'un mélange de liant hydraulique et d'agrégats solides additionné d'une quantité d'eau de gâchage suffisante pour constituer une pâte plus ou moins plastique et susceptible de faire prise. Normalement, on appelle mortier un mélange de liant et de sable apte à servir de liant, à remplir des joints, ou à réaliser des enduits ou des chapes, et on appelle béton le mélange de liant et d'agrégats comprenant de plus gros éléments tels que des cailloux et/ou du gravillon.

On demande généralement à un mortier ou à un béton un certain nombre de qualités telles que la résistance à l'écrasement, la compacité, l'étanchéité, l'adhérence aux maçonneries et aux armatures, un bon état de surface après décoffrage, etc... Ces qualités sont d'ailleurs liées entre elles et dépendent, notamment, de la nature et de la qualité du ciment et des agrégats, de la composition granulométrique, de la quantité d'eau de gâchage et des conditions de mise en oeuvre.

L'industrie du ciment est très ancienne et a fait l'objet de nombreux perfectionnements qui ont permis d'améliorer les performances des mortiers et des bétons et qui ont porté, notamment, sur la qualité et le dosage du ciment et des agrégats, la définition de compositions granulométriques optimales et la mise au point de certains adjuvants liquides ou solides tels que des fluidifiants ou plastifiants qui permettent de faciliter la mise en oeuvre du béton, des retardateurs ou accélérateurs de prise, etc...

En particulier, on a mis au point, depuis quelques années, des bétons dits "à hautes performances" dont la résistance à l'écrasement est très supérieure à celle des bétons normaux et peut atteindre plusieurs centaines de MPa. D'une façon générale, on appelle ainsi les bétons dont la résistance à l'écrasement est supérieure à 40 MPa.

Une telle résistance a pu être obtenue grâce à l'amélioration de la qualité des ciments et à la mise au point de compositions particulières qui permettent notamment d'améliorer le "squelette granulométrique" pour obtenir des mélanges particulièrement homogènes et denses et de diminuer le rapport E/C de la quantité d'eau à la quantité pondérale de ciment grâce à l'utilisation d'adjuvants.

En particulier, pour la réalisation de bétons à hautes performances, il est habituel d'ajouter au ciment une poudre siliceuse ultrafine qui, d'une part, permet d'améliorer le squelette granulométrique du mélange en comblant les vides entre les grains du ciment, et, d'autre part, intervient chimiquement, par effet "pouzzolanique" dans la réaction d'hydratation du ciment. Généralement, cette poudre siliceuse est constituée de fumée de silice, c'est-à-dire un produit obtenu industriellement et présentant une granulométrie moyenne de 0,1 µm.

Le document WO 81/03170, par exemple, décrit plusieurs compositions de ce type permettant d'obtenir des résistances à l'écrasement très importantes.

Il faut noter que l'amélioration apportée par de tels bétons ne réside pas seulement dans l'augmentation de la résistance à l'écrasement, mais peut aussi porter sur l'ensemble des performances, et a permis de développer considérablement les possibilités d'application du béton.

Mais la proportion de fumée de silice utilisée est relativement importante. Ainsi, les exemples donnés dans le document WO 81/03170 indiquent des quantités de l'ordre de 20 % du poids de ciment. Or, un tel produit est assez onéreux et, en outre, de telles proportions nécessitent l'utilisation d'adjuvants également onéreux en assez grande quantité.

De plus, la fumée de silice, lorsqu'elle est utilisée en proportions importantes, peut influencer défavorablement l'aspect extérieur du béton en raison de sa couleur sombre. De ce fait, alors que les bétons à hautes performances ont l'avantage de présenter un excellent aspect de surface après décoffrage, il est généralement nécessaire de recouvrir le béton d'un revêtement purement décoratif.

L'invention a pour objet, pour la réalisation de bétons à hautes performances ayant une résistance à l'écrasement supérieure à 40 MPa, de remplacer la fumée de silice par un produit siliceux qui, jusqu'à présent, n'avait pas été utilisé pour de telles applications et qui n'en présente pas les inconvénients et est plus facile à mettre en oeuvre tout en apportant des avantages comparables.

Conformément à l'invention, le produit siliceux est constitué d'une poudre fine obtenue par simple désagrégation d'une Diatomite naturelle prélevée en carrière, jusqu'à un degré de finesse compris entre 0,1 et 100 µm, et susceptible de remplacer une partie du ciment à résistance égale, ladite poudre étant présente dans une proportion d'au moins 7 % de la quantité pondérale de ciment.

L'utilisation de Diatomite naturelle dans la fabrication des mortiers ou bétons avait déjà été envisagée il y a très longtemps, mais seulement dans des proportions réduites, en tant que substitut des produits siliceux d'origine volcanique, tels que les pouzzolanes. Ainsi, le document US RE 16.732 insiste sur la nécessité de régler de façon précise la granulométrie de la Diatomite et de ne pas dépasser une proportion de 10 % du poids de ciment, une proportion de moins de 2 % étant préférée.

Mais les résistances à l'écrasement obtenues restaient faibles et, par la suite, les diatomites naturelles n'avaient reçu que des applications très particulières, par exemple pour leurs propriétés abrasives, et, en pratique, elles n'étaient plus utilisées dans l'industrie du ciment.

Alors que jusqu'à présent il avait semblé nécessaire, pour réaliser des bétons à hautes performances, d'utiliser des produits industriels dont la nature et la granulométrie étaient définies avec précision, comme le montre le document WO 81/0370, il était donc tout à fait surprenant d'envisager d'utiliser dans le même but un produit naturel, et même brut de carrière, qui doit seulement subir une simple désagrégation.

Or les essais conduits par l'inventeur ont montré que non seulement des diatomites naturelles permettaient d'obtenir des performances analogues à celles que donnait la fumée de silice, mais qu'en outre leurs qualités particulières apportaient d'autres avantages.

Dans un premier mode de réalisation préférentiel, la poudre de Diatomite est broyée jusqu'à une granulométrie comprise entre 0,1 et 30 µm et est susceptible de remplir les vides entre les grains de ciment.

Dans un autre mode de réalisation, la Diatomite est simplement désagrégée jusqu'à une granulométrie comprise entre 30 et 100 µm, ladite poudre étant susceptible de remplir les vides entre les grains de sable à la façon d'un filler.

Dans tous les cas, la Diatomite apporte simultanément un effet mécanique d'amélioration du squelette granulométrique du mélange et un effet chimique de réaction pouzzolanique et permet d'obtenir une résistance à l'écrasement d'au moins 40 MPa à 28 jours.

De préférence, la proportion de Diatomite sera comprise entre 10 et 15 %.

D'une façon générale, il sera intéressant d'utiliser une Diatomite comportant, notamment, en pourcentages pondéraux :
de 75 à 95 % de Si O2
de 1 à 6 % de Al2 O3
de 0,5 à 3 % de Fe2 O3
de 0,5 à 1 % de CaO
ainsi que différents oxydes minéraux en proportions plus réduites.

Mais l'un des avantages de l'invention est d'utiliser un matériau pratiquement brut de carrière et dont la composition peut être sensiblement différente selon le site d'extraction.

On a constaté qu'il pouvait également être intéressant d'utiliser une Diatomite comprenant une proportion beaucoup plus importante d'alumine et dont la composition peut être la suivante :
de 50 à 60 % de Si O2
de 15 à 25 % de Al2 O3
de 0,5 à 4 % de Fe2 O3
de 0,5 à 1 % de CaO.

Toutefois, pour l'obtention de bétons à hautes performances, une telle Diatomite nécessitera un traitement de calcination à 400/500°C.

Selon l'une des caractéristiques essentielles de l'invention, la Diatomite peut présenter des avantages même en proportion assez réduite, éventuellement inférieure à 7 %, car elle peut se substituer à une partie du ciment sans diminuer la résistance du mortier ou du béton obtenu. Dans ce cas, l'addition de fluidifiant peut ne pas être nécessaire.

Mais généralement, la Diatomite sera ajoutée au ciment pour l'obtention d'un mortier ou béton à hautes performances et le mélange sera additionné d'un fluidifiant tel qu'un sulfonate, par exemple dans une proportion d'environ 1 % du poids de ciment.

Mais l'invention sera mieux comprise en se référant à des exemples de réalisation dans la description détaillée qui va suivre.

D'une façon générale, on sait que la Diatomite est un sédiment siliceux, pulvérulent, formé, au cours des âges, par accumulation de Diatomées, c'est-à-dire d'algues microscopiques contenues dans l'eau douce, saumâtre ou salée, et qui se sont accumulées en masses considérables, formant un minerai appelé "Terre à Diatomées", ou "Diatomite", mais aussi "Kieselguhr", "Tripoli", "Randanite", "Terre d'infusoirs" ou "Farine fossile".

Jusqu'à présent, les Diatomites étaient plutôt considérées comme une curiosité et n'avaient trouvé que de faibles utilisations industrielles pour leurs propriétés absorbantes ou abrasives, ou bien pour constituer des filtres.

Mais les Diatomites sont assez répandues et peuvent se trouver, dans certains sites particuliers, en masses très importantes, notamment dans le Centre de la France.

Le plus souvent, la composition chimique d'une Diatomite utilisable selon l'invention pourra être la suivante :

| | |
|---|---|
| Teneur en silice amorphe (Si02) | 80 à 95 % |
| Al203 | 1 à 4 % |
| Mg0 | 0,1 à 0,5 % |
| Fe203 | 0,5 à 3 % |
| Ti02 | 0,1 à 1 % |
| CaO | 0,5 à 1 % |
| K2O | traces à 0,5 % |
| Na2O | traces à 0,5 % |

| surface spécifique après traitement : | |
|---|---|
| valeur moyenne | 5 à 10 m2/g |
| valeur optimisée | > ou = à 10 m2/g. |

En particulier, l'inventeur a fait effectuer des essais sur des Diatomites de trois sites différents dont les compositions sont indiquées, avec les références A 1, A 2, A 3, dans le tableau suivant qui précise les pourcentages en masse des différents constituants :

| | A 1 | A 2 | A 3 |
|---|---|---|---|
| perte au feu | 3,35 | 11,79 | 0,46 |
| SiO₂ | 93,96 | 77,83 | 91,05 |
| Al₂O₃ | 1,05 | 5,60 | 4,16 |
| Fe₂O₃ | 0,72 | 2.14 | 1,90 |
| CaO | 0,54 | 0,60 | 0,75 |
| MgO | 0,15 | 0,47 | 0,43 |
| SO₃ | 0,07 | 0,22 | 0,06 |
| Na₂O | 0,05 | 0,21 | 0,40 |
| K₂0 | 0,009 | 0,28 | 0,29 |
| TiO₂ | 0,10 | 0,63 | 0,42 |
| MnO | 0,01 | 0,03 | 0,03 |
| P₂O₅ | 0,05 | 0,07 | 0,05 |
| SrO | 0,005 | 0,01 | 0,01 |
| Cr₂O₃ | 0,004 | 0,01 | 0,009 |
| F⁻ | 0,02 | 0,03 | 0,02 |
| TOTAL | 100,09 | 99,92 | 100,04 |

Ces compositions ont été caractérisées sur trois échantillons par analyse chimique, diffraction des rayons X, examens au microscope électronique à balayage, ces derniers montrant que les Diatomites sont constituées de particules très fines, de faciès variables, tels que disques, tubes, fibres, et sont issues de la silicification d'algues microscopiques dont la structure initiale alvéolaire cloisonnée est encore discernable.

L'analyse qualitative minéralogique par diffraction aux rayons X révèle la structure suivante :
- au moins 85 % d'une phase entièrement amorphe du type Opale,
- au plus 10 % de minéraux annexes : quartz, plagioclases, mica, argile ...
- moins de 5 % d'autres minéraux.

On notera que le matériau A 2 se distingue des deux autres par une perte au feu plus élevée, correspondant à la présence de matières organiques combustibles, et renferme en outre des quantités plus fortes d'Alumine et d'Oxyde de fer.

On a pu constater que les qualités particulières de la Diatomite, dues à son origine sédimentaire, permettent d'utiliser ce produit pratiquement à l'état brut de carrière, en lui faisant subir seulement un très léger broyage qui correspond à une simple désagrégation jusqu'à un degré de finesse micronique du même ordre que celui du ciment.

A partir d'échantillons de ces trois Diatomites ainsi broyées, on a réalisé des éprouvettes d'un mortier normal confectionné selon la norme NF P 15-403 en utilisant un ciment ordinaire du type CPA 55 dont l'analyse chimique et la composition minéralogique sont les suivantes :

| **- Analyse chimique :** | |
|---|---|
| Perte au feu | 1,74 |
| SiO2 | 21,15 |
| Al03 | 5,33 |
| ClO3 | 2,25 |
| CaO | 63,26 |
| MgO | 0,98 |
| SO3 | n.d. |
| Na2O | 0,08 |
| K2O | 1,16 |
| P2O5 | 0,17 |

| **- Composition minéralogique :** | |
|---|---|
| C3S | 51,6 |
| C2S | 22,9 |
| C3A | 10,5 |
| C4AF | 7,0 |

On a effectué des essais en compression et en flexion à 2 jours, 7 jours, 28 jours.

A titre d'exemple, une première série d'essais a été effectuée sur deux types d'éprouvettes C7, C15, réalisées à partir de l'échantillon A 3 substitué à une partie du ciment dans des proportions, respectivement de 7 % et de 15 % en poids, et pour lesquelles on a comparé les résistances avec celles d'une éprouvette témoin Ct confectionnée avec le même ciment, mais sans Diatomite. Il faut noter qu'un fluidifiant (Naphtalène) a été ajouté au mélange C15 contenant 15 % de Diatomite dans une proportion de 1,5 % du poids d'eau de gâchage, la valeur du rapport E/C étant maintenue, dans tous les cas, à 0,5.

Les résultats ont été les suivants :

| Echéance | | Ct | C7 | C15 |
|---|---|---|---|---|
| 2 jours | flexion | 6,2 | 6,2 | 4,8 |
| | compression | 31,9 | 30,0 | 25,7 |
| 7 jours | flexion | 7,6 | 7,9 | 7,6 |
| | compression | 48,3 | 46,6 | 45,0 |
| 28 jours | flexion | 8,8 | 9,5 | 10,0 |
| | compression | 58,1 | 59,6 | 63,0 |

Les valeurs indiquées (en MPa) sont les moyennes des valeurs obtenues sur trois éprouvettes pour la traction et six demi-éprouvettes pour la compression.

On constate que, dans une proportion de 7 %, la Diatomite permet d'obtenir des résistances au moins du même ordre et même, à 28 jours, un peu supérieures à celles obtenues avec le ciment seul. La Diatomite permet donc de réduire la proportion relative de ciment à résistance au moins égale.

Mais, pour une proportion de 15 % de Diatomite, la résistance obtenue à 28 jours est nettement supérieure.

D'autres essais ont permis de confirmer ces résultats. Ces essais, réalisés conformément à la norme canadienne CAN3-A5-M83, ont été effectués sur des éprouvettes réalisées à partir des mêmes matériaux A 1 et A 3 ainsi que sur d'autres Diatomites de composition analogue, certaines ayant été, auparavant, séchées ou calcinées.

Pour comparer les effets de la Diatomite à ceux de la fumée de silice, deux éprouvettes témoins ont été réalisées, l'une à partir de ciment seul et l'autre à partir du même ciment additionné de silice industrielle, plus précisément de la fumée de silice.

Le tableau donné ci-après indique la composition des gachées de mortier effectuées, ainsi que les résistances en compression obtenues a 1 jour, 7 jours et 28 jours, d'une part, sur des cubes réalisés respectivement à partir de ciment seul (témoin - colonne 1), et avec adjonction au ciment de 10 % de fumée de silice (référence - colonne 2) et d'autre part, sur des cubes réalisés à partir de différents ajouts de Diatomite (colonnes suivantes) :
- A :: Diatomite désagrégée
- B :: Diatomite séchée et broyée
- C :: Diatomite calcinée

| | IDENTIFICATION DES GACHEES DE MORTIER (kg/m3) | | | | |
|---|---|---|---|---|---|
| MATERIAUX | TEMOIN | REFERENCE 10 % FS | A 10 % | B 10 % | C 10 % |
| Eau distillée (g) | 359 | | | | |
| Ciment Portland normal (type 10) (g) | 740 | 666 | | | |
| Sable normalisé(g) | 2035 | | | | |
| Fumée de silice(g)- | | 74 | - | - | - |
| Diatomites (g) | - | - | 74 | | |
| Fluidifiant (ml) | - | 4 | 7 | 7 | 7 |

| | RESISTANCE EN COMPRESSION (MPa)* | | | | |
|---|---|---|---|---|---|
| PERIODE DE MURISSEMENT | TEMOIN | REFERENCE 10 % FS | A 10 % | B 10 % | C 10 % |
| 1 jour | 8,7 | 10,3 | 9,6 | 9,3 | 10,0 |
| 7 jours | 26,7 | 31,6 | 30,8 | 30,7 | 29,3 |
| 28 jours | 34,8 | 48,3 | 43,8 | 41 | 43,3 |

| | | | | | |
|---|---|---|---|---|---|
| * Valeur moyenne de 3 cubes (50 x 50 x 50) | | | | | |

On notera que pour tous les échantillons, le rapport E/C du poids d'eau à celui de ciment était de 0,485 et la quantité de Diatomite substituée au ciment était de 10 % du poids de ciment.

En outre, on a utilisé un superplastifiant à base de Naphtalène dans les quantités indiquées sur le tableau.

On constate que, pour tous les échantillons, on obtient, dès l'essai à 7 jours, des résistances supérieures à celles que donne le ciment seul.

Le processus se poursuit à 28 jours et l'on constate que l'adjonction de Diatomite apporte une augmentation de résistance significative par rapport à celle de l'échantillon témoin, les résistances obtenues étant comparables à celle que l'on obtient avec l'adjonction de fumée de silice dans la même proportion.

La réactivité pouzzolanique des Diatomites utilisées selon l'invention a pu être établie par l'essai Chapelle qui consiste à mettre le produit en contact avec une suspension de Ca(OH)2 à 80°C pendant plusieurs heures. Des essais réalisés notamment sur les Diatomites A 1 et A 2, dont les compositions ont été indiquées plus haut, ont montré que la capacité de fixation de la Chaux, exprimée en milligrammes de CaO par gramme de produit, pouvait aller de 560 à 590 ce qui traduit une pouzzolanicité très élevée puisque les valeurs moyennes observées sur les pouzzolanes sont habituellement de l'ordre de 300 à 400.

On a également mesuré la chaleur d'hydratation, suivant la méthode du calorimètre de Langavant (NF P.15-436), et les dégagements de chaleur mesurés, en Joules par gramme, pour un mortier témoin à base de ciment seul (M) et pour un mortier réalisé à partir d'un mélange contenant 7 % de Diatomite (M7), sont rassemblés dans le tableau suivant :

| | Echéance | 6h | 12h | 1j | 2j | 3j | 4j | 5j |
|---|---|---|---|---|---|---|---|---|
| M | dégagement de chaleur (joules/g) | 96,7 | 276,3 | 359,6 | 364,2 | 363,3 | 365,0 | 367,1 |
| M7 | dégagement de haleur (joules/g) | 125,2 | 270,4 | 351,2 | 357,9 | 358,3 | 359,2 | 360,4 |

Il apparaît bien au début de la prise une augmentation de la chaleur dégagée montrant une certaine réactivité chimique de la Diatomite.

On notera aussi que, grâce à sa réactivité pouzzolanique, la Diatomite ajoutée au ciment permet de fixer les ions de Chaux et, plus généralement les alcalins, en diminuant ainsi le risque d'apparition de cristaux néfastes pouvant conduire ultérieurement à des désordres.

En conclusion, ces essais montrent que la fumée de silice utilisée jusqu'à présent pour la réalisation des bétons à hautes performances pouvait être remplacée, avec des résultats comparables, par des Diatomites naturelles, ayant subi une simple désagrégation.

Il apparaît, en effet, que, contrairement à ce que l'on avait pu croire, il n'était pas nécessaire, pour remplir les vides entre les grains de ciment, de donner à la poudre siliceuse utilisée, un degré de finesse aussi élevé que celui de la fumée de silice puisque une Diatomite broyée jusqu'à une granulométrie comprise entre 0,1 et 30 µm apporte une augmentation de résistance très significative.

Même si la fumée de silice apporte une résistance encore plus grande, les résultats obtenus avec la Diatomite restent assez appréciables pour rentabiliser largement l'extraction et le traitement du produit ainsi que son transport depuis la carrière jusqu'au site d'utilisation.

Cet effet surprenant de la Diatomite peut être attribué à sa très grande réactivité pouzzolanique qui ressort des essais indiqués plus haut.

L'utilisation, selon l'invention, d'un produit pratiquement brut de carrière à la place de la fumée de silice, présente de très grands avantages.

Tout d'abord, un tel produit est peu onéreux puisque les gisements sont relativement nombreux et d'exploitation facile.

De plus, la Diatomite simplement désagrégée, se présente sous la forme d'une poudre fine dont la granulométrie et la cohésion s'apparentent à celles du ciment, ce qui permet de la conditionner en sacs et de la déverser directement dans la bétonnière, comme le ciment, pour être mélangée à celui-ci et aux agrégats avant l'addition d'eau.

D'autres essais ont d'ailleurs montré que la Diatomite pouvait également améliorer les performances du béton sous forme d'une poudre de granulométrie plus grossière, comprise entre 30 et 100 µm. Dans ce cas, les grains de Diatomite désagrégée remplissent les vides entre les grains de sable à la manière d'un filler et permettent encore d'améliorer le squelette granulométrique et, par conséquent, les performances du béton obtenu.

Cette grande souplesse d'utilisation de la Diatomite désagrégée constitue d'ailleurs l'un des principaux avantages de l'invention qui ne se limite évidemment pas aux seuls exemples que l'on a décrits plus haut.

En particulier, dans les essais réalisés, la Diatomite était utilisée à l'état de poudre et ajoutée en phase sèche au ciment ou aux agrégats avant le gâchage.

Mais on pourrait aussi utiliser la Diatomite à l'état humide, sous forme d'un coulis contenant, par exemple, jusqu'à 50 % par unité de poids.

Dans tous les cas, on pourra associer à la Diatomite un superplastifiant, de préférence à base de mélanine ou bien de formaldéhyde ou naphtalènesulfonate.

D'une façon générale, les conditions d'utilisation dépendront à la fois de la qualité de la Diatomite, celle-ci étant un produit naturel, et les propriétés que l'on désire obtenir.

En particulier, alors que les essais précédents portaient sur des Diatomites contenant de 80 à 95 % de silice amorphe, d'autres essais ont montré qu'on pouvait obtenir des résultats également très intéressants avec des Diatomites assez différentes ayant les caractéristiques suivantes :

| **- Composition chimique** | | |
|---|---|---|
| de 50 | à 60 % | de Si O2 |
| de 15 | à 25 % | de Al2 O3 |
| de 0,1 | à 0,5 | % de MgO |
| de 0,5 | à 4 % | de Fe2 O3 |
| de 0,5 | à 3 % | de TiO2 |
| de 0,5 | à 1 % | de CaO |
| de 0,5 | à 2 % | de K2O |
| de 0,5 | à 5 % | de NA20. |

| **- Composition minéralogique** | |
|---|---|
| - Quartz + Diatomées | 30 à 50 % |
| - Kaolinite | 35 à 45 % |
| - Plagioclases | 10 à 15 % |
| - Mica | 5 à 12 % |
| - Minéraux | en traces |

De préférence une Diatomite d'une telle composition subira un traitement thermique de calcination à 400/500°C permettant d'activer la kaolinite contenue dans le matériau. On a constaté, cependant, que l'utilisation d'une telle Diatomite sans traitement thermique permettait, dans une plage de dosage de 10 à 15 % du poids de ciment, des gains allant jusqu'à 100 % pour les résistances en compression à 24 heures.

Par exemple, on a fait des essais sur une Diatomite ayant la composition suivante :

| | |
|---|---|
| Perte au feu | 15,78 |
| SiO₂ | 55,92 |
| Al₂O₃ | 19,65 |
| Fe₂O₃ | 2,95 |
| CaO | 0,55 |
| MgO | 0,34 |
| SO₃ | - |
| Na₂O | 0,88 |
| K₂O | 1,20 |
| TiO₂ | 2,66 |
| MnO | 0,014 |
| P₂O₅ | 0,04 |
| Cr₂O₃ | 0,023 |
| SrO | 0,02 |
| Total | 100,03 |

Les résistances en compression ont été déterminées sur des éprouvettes 16 x 32 et comparées aux résistances des mêmes éprouvettes réalisées avec le même ciment mais sans Diatomite et les résultats ont été les suivants :

### RESISTANCE EN COMPRESSION AU JEUNE AGE SUR EPROUVETTES 16 x 32

| **- FORMULE SANS DIATOMITE :** | |
|---|---|
| Unité (MPa) | 9 h. |
| Eprouvette N° 1 | 8,60 |
| Eprouvette N° 2 | 8,40 |
| Eprouvette N° 3 | 8,70 |
| Moyenne | 8,57 |
| Ecart type | 0,15 |

| **- FORMULE AVEC DIATOMITE :** | |
|---|---|
| Unité (MPa) | 9 h. |
| Eprouvette N° 1 | 19,10 |
| Eprouvette N° 2 | 19,70 |
| Eprouvette N° 3 | 20,20 |
| Moyenne | 19,67 |
| Ecart type | 0,55 |

| - FORMULE TYPE (au mètre cube) | |
|---|---|
| . Sable 0/3 | 902 kg |
| . Gravillon 5/10 | 168 kg |
| . Gravier 8/16 | 700 kg |
| . Ciment CAP HPR | 375 kg |
| . Filler 0/5O µm | 50 kg |
| . Adjuvant (2 % de la masse ciment) | 7,50 kg |

Il faut noter que l'augmentation de compacité et le maintien du rapport E/C à une valeur peu élevée qui résultent de l'utilisation de la Diatomite, permettent, comme pour la fumée de silice, d'agir non seulement sur la résistance à l'écrasement, mais également sur les autres performances du béton, qui, pour la plupart, sont corollaires de l'effet granulaire et de l'effet pouzzolanique.

On peut citer, notamment, une réduction des phénomènes de ressuage et d'exsudation, une meilleure tenue contre l'érosion et l'abrasion, une nette amélioration de la durabilité du matériau par une forte diminution de sa porosité et de sa perméabilité.

Enfin, l'état de surface après décoffrage est également amélioré et, de ce point de vue, l'utilisation de Diatomites apporte un grand avantage par rapport à la fumée de silice qui, dans une proportion importante, pouvait assombrir le béton, les Diatomites n'ayant pas cet inconvénient. Au contraire, du fait de leur origine naturelle, les Diatomites peuvent avoir des couleurs variées en fonction des gisements et pourront ainsi être utilisées judicieusement pour améliorer l'aspect extérieur des ouvrages construits.

## Revendications

1. Mortier ou béton à hautes performances, ayant une résistance à l'écrasement supérieure à 40 MPa et comprenant, en proportions voulues, un ciment hydraulique, des agrégats solides, un produit siliceux en poudre fine et des adjuvants éventuels, l'ensemble étant mélangé avec de l'eau pour faire prise,
caractérisé par le fait que le produit siliceux est constitué d'une poudre fine obtenue par simple désagrégation d'une Diatomite naturelle prélevée en carrière jusqu'à un degré de finesse compris entre 0,1 et 100 µm, et susceptible de remplacer une partie du ciment à résistance égale, ladite poudre étant présente dans une proportion d'au moins 7 % de la quantité pondérale de ciment.

2. Mortier ou béton selon la revendication 1, caractérisé par le fait que la poudre de diatomite est broyée jusqu'à une granulométrie comprise entre 0,1 et 30 µm et est susceptible de remplir les vides entre les grains de ciment.

3. Mortier ou béton selon la revendication 1, caractérisé par le fait que la diatomite est simplement désagrégée jusqu'à une granulométrie comprise entre 30 et 100 µm, ladite poudre étant susceptible de remplir les vides entre les grains de sable à la façon d'un filler.

4. Mortier ou béton selon l'une des revendications précédentes, caractérisé par le fait que la proportion de diatomite sera comprise entre 10 et 15 %.

5. Mortier ou béton selon l'une des revendications précédentes, caractérisé par le fait que la diatomite peut se substituer à une partie du ciment et permet d'en réduire la proportion dans le mortier ou béton, au moins à résistance égale.

6. Mortier ou béton selon l'une des revendications précédentes, caractérisé par le fait que pour une même qualité de ciment, l'adjonction de Diatomite permet d'améliorer la résistance du mortier ou béton jusqu'à une valeur d'au moins 40 à 50 MPa, à 28 jours.

7. Mortier ou béton selon l'une des revendications précédentes, caractérisé par le fait que, pour une même qualité de ciment, l'adjonction de Diatomite à l'état naturel dans une proportion de 10 à 15 % du poids de ciment permet un gain allant jusqu'à 100 % pour la résistance en compression à 24 heures.

8. Mortier ou béton selon l'une des revendications précédentes, caractérisé par le fait qu'avant d'être ajouté au mélange, la diatomite est séchée.

9. Mortier ou béton selon la revendication 8, caractérisé par le fait que la diatomite subit, avant son mélange avec le ciment, un traitement thermique de calcination à une température de 400/500°C.

10. Mortier ou béton selon l'une des revendications précédentes, caractérisé par le fait que le mélange est additionné d'un fluidifiant tel qu'un sulfonate.

11. Mortier ou béton selon la revendication 10, caractérisé par le fait que la proportion de fluidifiant est d'environ 1,5 % du poids d'eau.

12. Mortier ou béton selon l'une des revendications précédentes, caractérisé par le fait que la diatomite comporte notamment, en pourcentages pondéraux :
de 75 à 95 % de Si O2
de 1 à 6 % de Al2 O3
de 0,5 à 3 % de Fe2 O3
de 0,5 à 1 % de CaO
ainsi que différents oxydes minéraux en proportions plus réduites.

13. Mortier ou béton selon l'une des revendications 1 à 11 , caractérisé par le fait que la Diatomite peut comporter, en pourcentages pondéraux, au moins 50 % de SiO2 et jusqu'à 25 % de Al2O3, ladite Diatomite subissant, avant utilisation, un traitement thermique de calcination.

14. Utilisation de Diatomites naturelles comme substituant à une partie du ciment pour la fabrication de mortiers ou de bétons selon l'une des revendications 1 à 13.

15. Utilisation selon la revendication 14 de diatomites naturelles pour la réalisation de bétons architectoniques ayant un excellent aspect extérieur et dont la couleur peut varier en fonction du gisement d'où provient la Diatomite.

## Claims

1. High-performance mortar or concrete having a crushing strength upper than 40MPa, comprising, in the desired proportions, a hydraulic cement, solid aggregates, a siliceous product in fine powder form and possibly additives, all these components being mixed with water in order to set,
characterized in that the siliceous product consists of a fine powder obtained by a simple disaggregation of a natural diatomite excavated from a quarry, up to a particle size of between 0.1 and 100µm, and which is able to replace at equal strength a portion of the cement, the proportion of said powder being at least 7% of the weight of cement.

2. Mortar or concrete according to claim 1, characterized in that the diatomite powder is crushed to a particle size of between 0.1 and 30µm and is able to fill the voids between the cement grains.

3. Mortar or concrete according to claim 1, characterized in that the diatomite is simply disaggregated up to a particle size of between 30 and 100µm, said powder being able to fill the voids between the sand grains as a filler.

4. Mortar or concrete according to any one of the preceding claims, characterized in that the proportion of diatomite is between 10% and 15%.

5. Mortar or concrete according to any one of the preceding claims, characterized in that the diatomite can be substituted for a portion of the cement and allows the proportions of cement in the mortar or concrete to be reduced for a least equal strength.

6. Mortar or concrete according to any one of the preceding claims, characterized in that for a given quality of cement, the addition of diatomite increases the strength of the mortar or concrete up to a value of at least 40 to 50 MPa, measured at 28 days.

7. Mortar or concrete according to any one of the preceding claims, characterized in that for a given quality of cement, the addition of natural diatomite in the proportion of 10 to 15% of the cement weight allows an increase up to 100% for the compression strength measured at 24 hours.

8. Mortar or concrete according to any one of the preceding claims, characterized in that the diatomite is dried before being added to the mixture.

9. Mortar or concrete according to claim 8, characterized in that the diatomite is subjected to a calcination heat treatment at 400/500°C before the mixing thereof with cement.

10. Mortar or concrete according to any one of the preceding claims, characterized in that a thinning agent such as a sulfonate is added to the mixture.

11. Mortar or concrete according to claim 10, characterized in that the proportion of thinning agent is approximately 1.5% of the weight of the water.

12. Mortar or concrete according to any one of the preceding claims, characterized in that the diatomite comprises, in particular, in percentages of weight:
75% to 95% of SiO₂
1% to 6% of Al₂O₃
0.5% to 3% of Fe₂O₃
0.5% to 1% of CaO
as well as of various mineral oxides in smaller proportions.

13. Mortar or concrete according to any one of claims 1 to 11, characterized in that the diatomite can comprise in percentages of weight, at least 50% of SiO₂ and up to 25% of Al₂O₃, said diatomite being subjected to calcination heat treatment before use.

14. Use of natural diatomites as a substitute for a portion of cement for the making of mortars or concretes according to any one of claims 1 to 13.

15. Use according to claim 14 of natural diatomites for the production of architectonic concretes with excellent external appearance and whose color can vary according to the origin of the diatomite.

## Patentansprüche

1. Hochleistungsmörtel oder -beton mit einer Druckfestigkeit grösser als 40 MPa, bestehend, in bestimmten Anteile, aus einem hydraulischen Zement, festen Zuschlagstoffe, einem feinpulverigen siliziumhaltigen Erzeugnis und evtl. Zusatzmittel, wobei sämtliche Stoffe zum Abbinden mit Wasser gemischt werden, dadurch gekennzeichnet, dass das siliziumhaltige Erzeugnis aus einem feinen Pulver besteht, das durch einfache Zersetzung von in einer Grube bis zu einem Feinheitsgrad zwischen 0,1 und 100 mµ gewonnenem natürlichen Kieselgur erzielt wurde, und das geeignet ist, bei gleichwertiger Festigkeit, ein Teil Zement zu ersetzen, wobei dieses Pulver in einem Anteil von mindestens 7% des Zementgewichtes vorhanden ist.

2. Mörtel oder Beton nach Anspruch 1, dadurch gekennzeichnet, dass das Kieselgurpulver bis zu einer Körnung zwischen 0,1 und 30 mµ fein vermahlen wird und die Zwischenräume zwischen den Zementkörner ausfüllen kann.

3. Mörtel oder Beton nach Anspruch 1, dadurch gekennzeichnet, dass das Kieselgur bis zu einer Kömung zwischen 30 und 100 mµ einfach zersetzt wird, wobei dieses Pulver die Zwischenräume zwischen den Sandkörner, wie ein Filler, ausfüllen kann.

4. Mörtel oder Beton nach einem der vorangehenden Ansprüche, dadurch gekennzeichnet, dass der Kieselguranteil zwischen 10 und 15% beträgt.

5. Mörtel oder Beton nach einem der vorangehenden Ansprüche, dadurch gekennzeichnet, dass das Kieselgur ein Teil Zement ersetzen und somit, mindestens bei gleichwertiger Festigkeit, dessen Anteil im Mörtel oder Beton verringern kann.

6. Mörtel oder Beton nach einem der vorangehenden Ansprüche, dadurch gekennzeichnet, dass das Zusetzen von Kieselgur bei gleicher Zementqualität die Festigkeit vom Mörtel oder Beton bis zu einem Wert von mindestens 40 bis 50 MPa nach 28 Tagen verbessern kann.

7. Mörtel oder Beton nach einem der vorangehenden Ansprüche, dadurch gekennzeichnet, dass durch das Zusetzen von Kieselgur im natürlichen Zustand in einem Anteil von 10 bis 15% des Zementgewichtes bei gleicher Zementqualität ein Gewinn bis zu 100% für die Druckfestigkeit nach 24 Stunden erzielt werden kann.

8. Mörtel oder Beton nach einem der vorangehenden Ansprüche, dadurch gekennzeichnet, dass das Kieselgur vor dessen Beimengung getrocknet wird.

9. Mörtel oder Beton nach einem der vorangehenden Ansprüche, dadurch gekennzeichnet, dass das Kieselgur vor dessen Mischung mit dem Zement in einem Röstvorgang bei einer Temperatur von 400/500° C wärmebehandelt wird.

10. Mörtel oder Beton nach einem der vorangehenden Ansprüche, dadurch gekennzeichnet, dass ein Verflüssiger, wie Sulfonat, der Mischung zugesetzt wird.

11. Mörtel oder Beton nach einem der vorangehenden Ansprüche, dadurch gekennzeichnet, dass der Anteil Verflüssiger ca. 1,5% des Wassergewichtes beträgt.

12. Mörtel oder Beton nach einem der vorangehenden Ansprüche, dadurch gekennzeichnet, dass das Kieselgur, insbesondere in Gewichtsprozente
von 75 bis 95% an Si O2
von 1 bis 6% an Al2 O3
von 0,5 bis 3% an Fe2 O3
von 0,5 bis 1% an CaO
aufweist sowie verschiedene geringere Anteile Mineraloxyde.

13. Mörtel oder Beton nach einem der Ansprüche 1 bis 11, dadurch gekennzeichnet, dass das Kieselgur in Gewichtsprozente mindestens 50% SI02 und bis zu 25% Al2O3 aufweisen kann, wobei dieses Kieselgur vor dem Einsatz in einem Röstvorgang wärmebehandelt wird.

14. Einsatz von natürlichem Kieselgur als Ersatz für einen Teil Zement zur Herstellung von Mörtel oder Beton nach einem der Ansprüche 1 bis 13.

15. Einsatz nach Anspruch 14 von natürlichen Kieselguren zur Herstellung von architektonischen Sichtbetons mit einem ausgezeichneten Aussehen, deren Tönung je nach der Kieselgurherkunft aus der Lagerstätte variiren kann.
